# EUROPÄISCHE PATENTSCHRIFT

(11) **EP 2 564 102 B1**
(45) Veröffentlichungstag und Bekanntmachung des Hinweises auf die Patenterteilung: **16.05.2018**
(21) Anmeldenummer: 10778833.3
(22) Anmeldetag: 09.09.2010
(51) Int. Cl.: F16L 5/10, F16L 5/02

(54) **DICHTUNGSMANSCHETTE**
SEALING COLLAR
MANCHON D'ÉTANCHÉITÉ

(30) Priorität: 28.04.2010 DE 102010018677
(43) Veröffentlichungstag der Anmeldung: 06.03.2013
(60) Teilanmeldung: 18165716.4
(73) Patentinhaber: Watermann Polyworks GmbH, 32758 Detmold (DE)
(72) Erfinder: WATERMANN, Markus, 32805 Horn-Bad Meinberg (DE)
(74) Vertreter: Helwig, Hans-Martin
(86) Internationale Anmeldenummer: PCT/DE2010/001063
(87) Internationale Veröffentlichungsnummer: WO 2011/134445

(56) Entgegenhaltungen:
- EP-A2- 0 794 375
- WO-A1-98/39591
- DE-U1- 29 822 257

## Beschreibung

Die Erfindung betrifft eine elastische Dichtungsmanschette für ein Abdichten des Übergangs von einer Wand auf ein der Wand vorstehendes Rohr oder dergleichen, aufweisend eine zentrale Durchbrechung, deren Größe kleiner bemessen ist als der Querschnitt des Rohres.

Dichtungsmanschetten der voranstehend genannten Art sind in vielfältigen Ausführungsformen bekannt und bewährt. Zumeist finden sie in einem Nassbereich einer Wohnung wie beispielsweise einem Bad, einer Dusche etc. Verwendung und dichten zumeist ein Wasserrohr gegen eine Wand ab, die über die Dichtungsmanschette hinweg beispielsweise mit Fliesen belegt ist.

Aus der DE 298 22 257 U1 ist eine solche Dichtungsmanschette bekannt, bei der ein elastisches Mittelteil in die zentrale Öffnung einer Wandauflage mittels Verkleben oder Vulkanisieren eingebracht und angefügt wird. Aus der DE 41 31 637 A1 ist eine weitere elastische Dichtungsmanschette bekannt, die sowohl an einer aufgehenden Wand gut verhaftet als auch einem Belag wie Fliesen einen guten Halt bieten kann. Damit soll eine sichere Abdichtung zwischen Rohr und Mauerwerk geschaffen werden.

Hierzu ist die aus einem elastischen Material bestehende Dichtungsmanschette zumindest einseitig mit einer offenporigen oder faserigen Deckschicht versehen, die einen ringförmigen Bereich um die Durchbrechung frei belässt, um die Flexibilität des Bereichs nicht zu beeinträchtigen und eine sichere Anlage dieses flexiblen Mittelteils an das Rohr sicherzustellen. Dies erfordert einen erheblichen Aufwand bei der Herstellung.

Daneben tragen diese bekannten Dichtungsmanschetten aufgrund des Verbundes vergleichweise stark auf, um die Abdichtung des Übergangs von der Wand auf ein der Wand vorstehendes Rohr dauerhaft zu gewährleisten. Um diesem Problem zu begegnen, ist bekannt, als Trägermaterial eine relativ dünne PVC-Folie zu verwenden, die sich jedoch in neueren Prüfverfahren als ungeeignet erwiesen hat, da PVC nicht alkalibeständig ist, sondern unter alkalischem Einfluss sehr schnell versprödet, womit eine Dichtfunktion nicht mehr gewährleistet ist.

Als problematisch hat es sich bei der Herstellung der bekannten Dichtungsmanschetten ferner erwiesen, diese auf der der Wand zugewandten Seite selbstklebend zu beschichten. Häufig überdeckt eine solche Kleberbeschichtung auch das flexible Mittelteil, so dass eine derartige Dichtungsmanschette kaum mehr zu verwenden ist, da die Manschetten bei einem Anbringen bereits an dem Rohr, einem Baustopfen oder dergleichen verklebt und nicht an der Wand.

Darüber hinaus weisen die bekannten Dichtungsmanschetten das grundsätzliche Problem auf, dass es bei einem Überstülpen über ein Rohr und einem Anlegen an die Wand zu einer Verformung der gesamte Dichtungsmanschette kommt, womit diese häufig nicht mehr plan und eben an eine Wand angelegt werden kann.

Um diese Problematik zu überwinden, wird nach der Erfindung gemäß dem Verfahren des Anspruchs 1 bei einer Dichtungsmanschette für ein Abdichten des Übergangs von einer Wand auf ein der Wand vorstehendes Rohr oder dergleichen, aufweisend eine zentrale Durchbrechung, deren Größe kleiner bemessen ist als der Querschnitt des Rohres, darauf abgestellt, dass ein gesondert ausgebildetes, elastisches Mittelteil vorgesehen und dass an das Mittelteil randseitig eine Wandauflage angefügt ist. Nach der Erfindung wird das elastische Mittelteil in einer Spritzgussmaschine in ein zentrale Öffnung der Wandlauflage eingebracht und eingefügt. Eine solche Dichtungsmanschette bietet eine Vielzahl von Vorteilen gegenüber den herkömmlichen.

Zunächst bietet die Dichtungsmanschette nach der Erfindung die Möglichkeit, durch eine spezielle Materialwahl für das Mittelteil und die Wandauflage deren Funktion jeweils zu optimieren. Hierbei wird das Mittelteil aus einem besonders elastischen Kunststoff bestehen, während die Wandauflage durch ein vergleichsweise steifes, jedoch leicht mit einem Kleber, einem Mörtel oder dergleichen verhaftbares Material ausgebildet ist.

Insbesondere kann dabei vorgesehen sein, dass die Wandauflage ein Vlies ist, beispielsweise ein PP-Spinnvlies, wie es für die Abdichtung von Wänden regelmäßig verwendet wird. Dabei stellt es kein Problem dar, dieses Vlies folienkaschiert auszubilden, beispielsweise auch selbstklebend, ohne dass das flexible Mittelteil hiervon in Leidenschaft gezogen wird.

Es kann vorgesehen sein, dass das Mittelteil aus einem sehr elastischen Material, beispielsweise einem TPE, passgenau in eine Öffnung der Wandauflage eingesetzt ist oder, alternativ, dass das Mittelteil und die Wandauflage überlappen.

Unabhängig davon, ob die Wandauflage ein Verbundwerkstoff, ein Komposit aus Vliesstoffen und Folien ist, hat es sich als zweckmäßig erwiesen, wenn auf der überlappten Flachseite der Wandauflage ein Vlies aufkaschiert ist. Es kann dieses Vlies, sofern der überlappte Bereich ausgespart ist, einen Höhenausgleich darstellen oder, wenn der überlappte Bereich oder gegebenenfalls das gesamte Mittelteil mit Ausnahme der zentralen Durchbrechung von einem solchen Vlies überdeckt wird, einer sehr guten Verhaftung mit einem Kleber, einem Mörtel oder dergleichen dienlich sein.

Unabhängig hiervon ist weiter vorgesehen, dass das Elastizitätsmodul der Wandauflage größer bemessen ist als das des Mittelteils. Dies erlaubt, bei geeigneter Materialwahl, zum einen eine optimale Anlage des elastischen Mittelteils an dem Rohr als auch zum anderen eine optimale Anlage der Wandauflage an einer Wand.

Für eine weitere Optimierung der Anlage an der Wand, gegebenenfalls auch unter einer gewissen Verspannung der Wandauflage, kann ferner vorgesehen sein, dass die Wandauflage randseitig umlaufend, außenrandseitig wie innenrandseitig, entlang der Öffnung, mit einer Lochung versehen ist, wobei vorzugsweise zwei parallele Reihen von Löchern vorgesehen werden, die auf Lücke gesetzt sind. Gegebenenfalls können die Löcher noch durch eine Randverstärkung oder einen aufgebrachten Streifen gegen ein Ausreißen verstärkt sein. Alternativ sind Perforationen möglich, gegebenenfalls auch über die gesamte Fläche der Wandauflage, so dass eine gewisse Dampfdurchlässigkeit ermöglicht ist, die darüber hinaus durch den Grad der Perforation einstellbar ist. Weitere Alternative stellen randseitige Ein- und Ausschnitte dar, durch die vorstehende Lappen in vielfältigen Formen ausgebildet werden können.

Dem Voranstehenden vergleichbar kann für eine verbesserte Verhaftung der Wandauflage mit dem Mittelteil vorgesehen werden, dass die Öffnung in der Wandauflage oval, rund oder ein Polygonzug ist, der gegebenenfalls mit Einschnitten noch versehen sein kann.

Des weiteren zeichnet sich die Dichtungsmanschette nach der Erfindung auch durch ein sehr einfaches Herstellungsverfahren aus. Bei einem Verfahren zur Herstellung einer Dichtungsmanschette für ein Abdichten des Übergangs von einer Wand auf ein der Wand vorstehendes Rohr oder dergleichen, insbesondere wie eingangs erläutert, wird darauf abgestellt, dass ein Zuschnitt einer Wandauflage erfolgt, bei dem in die Wandauflage eine zentrale Öffnung eingebracht wird, deren Abmessungen größer bemessen sind als die Abmessungen des Rohres, dass ein Zuschnitt eines elastischen Mittelteil erfolgt, dessen Abmessungen gleich oder größer bemessen sind als die der zentralen Öffnung, und der mit einer zentralen Durchbrechung versehen wird, deren Abmessungen kleiner bemessen sind als die des Rohres, und dass passgenau oder unter Überlappung das Mittelteil und die Wandauflage zusammengefügt werden.

Ein Vorteil dieses Verfahrens ist die Möglichkeit, den Zuschnitt der Wandauflage und den Zuschnitt des elastischen Mittelteils voneinander zu entkoppeln. Dies erlaubt es, beispielsweise Reste aus anderen Herstellungsverfahren von Dichtungen oder dergleichen für die Herstellung der Dichtungsmanschette zu verwenden. Auch ist eine freie Farbwahl unproblematisch möglich, um einem Kunden Dichtungsmanschetten in spezieller, wiederkehrender Farbkombination zukommen zu lassen. Nach der Erfindung wird nach dem Zuschnitt einer Wandauflage, entsprechend dem voranstehend erläuterten Verfahren, in einer

Spritzgussmaschine ein elastisches Mittelteil in die zentrale Öffnung eingebracht und angefügt, wobei es in einem Überlappungsbereich zu einem Aufschmelzen des elastischen Mittelteils und der Wandauflage kommen wird, im übrigen jedoch das Werkzeug aufgrund einer Kühlung das übrige Material der Wandauflage unbeschadet belassen wird.

Dieses Verfahren bietet darüber hinaus die Möglichkeit, durch entsprechende Ausbildung des Werkzeuges verschiedene Oberflächen des Mittelteils mit beispielsweise Marken, Bestellnummern oder dergleichen zu gestalten. Auch ist es möglich, die Materialstärke des elastischen Mittelteils einzustellen. Darüber hinaus können solche Mittelteile geschaffen werden, die einseitig, gegebenenfalls auch beidseits mit den Flachseiten der Wandauflage überlappen.

Die Dichtungsmanschette und ihre Herstellung werden anhand der Zeichnungen näher erläutert, in der lediglich Ausführungsbeispiele schematisch dargestellt sind. In der Zeichnung zeigt:
- Fig. 1:: in einer Draufsicht eine Dichtungsmanschette mit einem passgenau eingebrachten Mittelteil,
- Fig. 2:: einen Schnitt gemäß der Linie II, II in Figur 1,
- Fig. 3:: eine Draufsicht auf eine Dichtungsmanschette mit einem die Wandauflage überlappenden Mittelteil,
- Fig. 4:: einen Schnitt gemäß der Linie IV, IV in Figur 3,
- Fig. 5:: einen Schnitt durch ein weiteres Ausführungsbeispiel und
- Fig. 6:: eine Draufsicht auf eine Dichtungsmanschette, anhand der weitere Varianten beschrieben werden

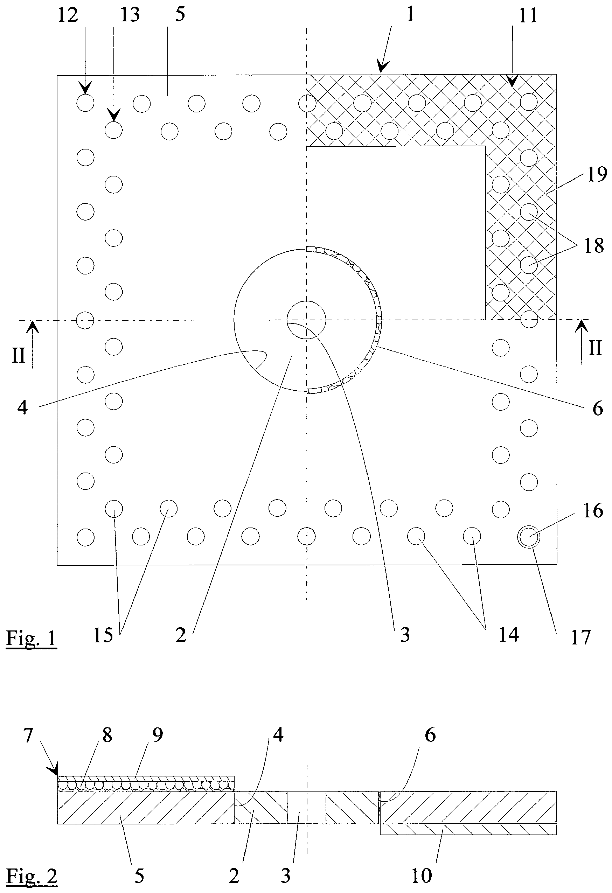

Die Figur 1 zeigt in einer Draufsicht eine Dichtungsmanschette 1 nach der Erfindung etwa in natürlicher Größe. Ein zentrales, gesondert ausgebildetes Mittelteil 2 weist eine Durchbrechung 3 auf, hier von kreisringförmigem Querschnitt, deren Durchmesser geringer bemessen ist als der eines einer Wand vorstehenden Rohrs, so dass das Mittelteil 2 unter Spannung auf ein solches Rohr aufgebracht werden muss.

Entsprechend der Durchbrechung 3 ist auch das Mittelteil 2 von kreisringförmiger Gestalt. Andere Geometrien, beispielsweise für ein Rohr von quadratischem oder rechteckigem Querschnitt wie bspw. von einem Kabelkanal sind gleichfalls problemlos möglich.

Das elastische Mittelteil 2 ist in eine zentrale Öffnung 4 einer vergleichsweise steifen Wandauflage 5 passgenau einzubringen, Figur 1 linke Bildhälfte, wobei der Durchmesser der Öffnung 4 größer bemessen ist als der des einer Wand vorstehenden Rohrs.

Das elastische Mittelteil 2, das ein kleineres Elastizitätsmodul als die Wandauflage 5 aufweist, könnte mit dieser durch Ultraschallschweißen, Mikrowellenschweißen, einen aufgeheizten, ringförmigen Stempel, gegebenenfalls durch geeignete Klebstoffe oder ein anderes Fügeverfahren verbunden werden. Die Erfindung sieht vor, einen Zuschnitt der Wandauflage 5 in eine Spritzgussmaschine einzubringen und dort das Mittelteil 2 gesondert auszubilden. Wird dabei ein geringfügig von der Öffnung 4 abgesetzter Bereich der Wandauflage 5 gekühlt, kommt es, wie auch bei anderen Füge- oder Klebeverfahren zu einem Nahtbereich 6, rechte Bildhälfte in Figur 1.

Die Wandauflage 5 ist als gesonderter Zuschnitt völlig unabhängig von dem elastischen Mittelteil 2 und kann deshalb beispielsweise als Vlies ausgebildet eine Kaschierung 7 aufweisen, beispielsweise eine Kleberschicht 8, die selbst noch mit einer Abdeckfolie 9 belegt ist, Figur 2 linke Bildhälfte.

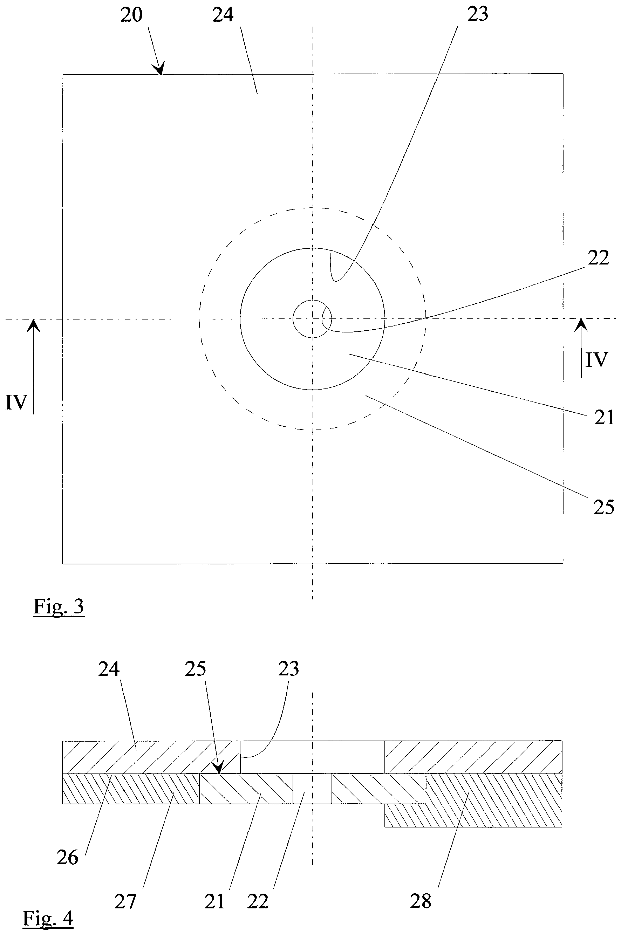

Ist die Wandauflage 5 beispielsweise durch eine vergleichsweise glatte Folie ausgebildet, so kann insbesondere wandseitig ein Vlies 10 aufkaschiert sein, Figur 3 rechte Bildhälfte, so dass auch ein solches Komposit gut mit einer Wand verhaftet werden kann.

Alternativ, gegebenenfalls zusätzlich zu einer Selbstklebebeschichtung wie die aus Kleberschicht 8 und Abdeckfolie 9 bestehende Kaschierung 7 kann für eine plane Anlage der Wandauflage 5 an einer Wand oder dergleichen die Dichtungsmanschette 1 randseitig umlaufend mit einer Lochung 11 versehen sein, die hier aus zwei Reihen 12,13 von Löchern 14,15 besteht. Diese Löcher 14,15 sind auf Lücke gesetzt, so dass bei einem Spannen und Festlegen der Dichtungsmanschette 1 mittels Heftzwecken, Nägeln, an einem Streckgitter oder dergleichen ein Ausreißen der Löcher 14,15 nicht zu befürchten ist.

Gegebenfalls kann ein Loch 16, in Figur 1 lediglich angedeutet, mit einer Randverstärkung 17 durch bspw. Aufschmelzen oder dergleichen des Materials der Wandauflage 5 bei dem Einbringen des Lochs 16 noch versehen sein.

Eine Alternative zu einer solchen Randverstärkung eines einzelnen Lochs 16 ist im ersten Quadranten der Fig. 1 dargestellt, wo Löcher 18 durch einen auf die Wandauflage 5 aufgebrachten Streifen 19 verstärkt werden.

Bei dem Ausführungsbeispiel einer Dichtungsmanschette 20 gemäß den Figuren 3 und 4 überlappen sich das elastische Mittelteil 21 mit zentraler Durchbrechung 22 und die Wandauflage 24. Entsprechend sind die Abmessungen des Mittelteils 21 größer zu bemessen als die einer Öffnung 23 in der Wandauflage 24. Auch hier stellen geeignete Füge- oder Klebeverfahren eine insbesondere zugfeste Verbindung zwischen dem Mittelteil 21 und der Wandauflage 24 her, wobei hierfür ein vergleichsweise großer Überlappungsbereich 25 zur Verfügung steht. Um die Höhendifferenz zwischen der überlappten Flachseite 26 der Wandauflage 24 und dem Überlappungsbereich 25 auszugleichen, kann die überlappte Flachseite 26 noch mit einem Vlies 27 belegt sein, vergleiche Figur 4 linke Bildhälfte.

Ist der Überlappungsbereich 25 sehr groß, kann auch daran gedacht sein, für ein besseres Verhaften mit einem Kleber, einem Mörtel oder dergleichen ein Vlies 28 über das Mittelteil 21 hinweg aufzukaschieren, vorzugsweise bis hin zur Kontur der Öffnung 23, vergleiche Figur 4 rechte Bildhälfte, gegebenenfalls jedoch auch bis hin zu der Durchbrechung 22.

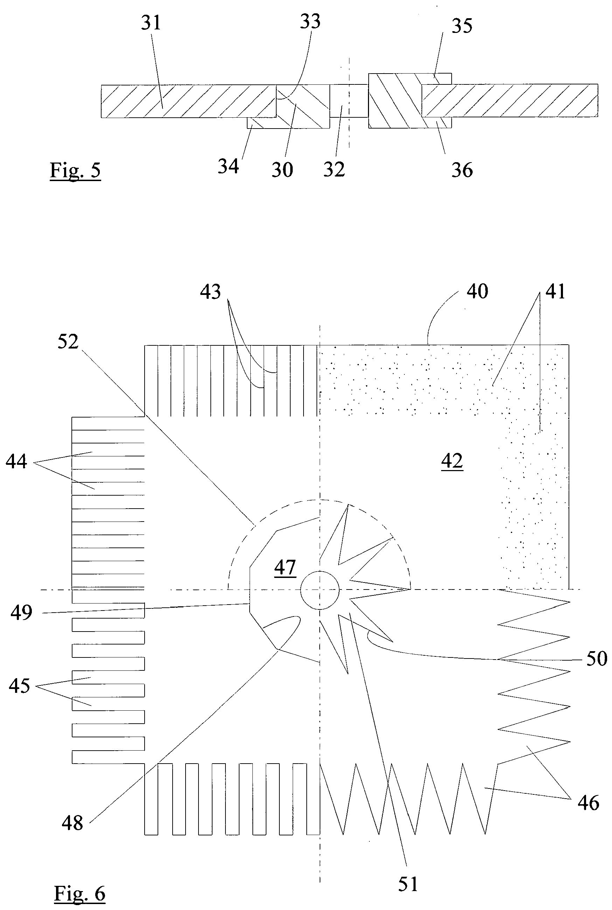

Das Erstellen eines flexiblen Mittelteils 30 gem. Fig. 5 in einer Spritzgussmaschinen bei eingelegter Wandauflage 31 bietet in vorteilhafter Weise eine Kombination aus einem passgenauen Einbringen des mit einer zentralen Durchbrechung 32 versehen Mittelteils 30 in eine Öffnung 33 mit einer einseitigen Überlappung 34, Figur 5 linke Bildhälfte, oder auch einer beidseitigen Überlappung 35,36, Figur 5 rechte Bildhälfte, so dass die Wandauflage 31 gleichsam von dem Mittelteil 30 eingefasst ist.

Darüber hinaus bietet das Einbringen des Mittelteils in einer Spritzgussmaschine die Möglichkeit, das Mittelteil durch entsprechende Auslegung des Werkzeugs mit Logos, Nummern oder dergleichen zu versehen.

Anhand der Figur 6 werden eine Vielzahl weiterer Varianten der Dichtungsmanschette nach der Erfindung erläutert, wobei die Randkontur 40 nicht auf die dargestellten quadratischrechteckigen Formen beschränkt ist. Rund-ovale oder Polygonzüge sind gleichfalls problemlos möglich. Um jedoch ein Verhaften der Dichtungsmanschette insbesondere randseitig zu verbessern, kann anstelle oder zusätzlich zu einer Lochung eine Perforation 41 in Form eines Randstreifens vorgesehen sein, in Figur 6 in der rechten oberen Bildhälfte angedeutet.

Eine solche Perforation 41 kann sich ggfls. auch über die gesamte Wandauflage 42 erstrecken, womit, in gewissem Umfang, eine derartig perforierte Dichtungsmanschette dampfdurchlässig ist.

Eine weitere Alternative für eine verbesserte, randseitige Verhaftung können einfache Einschnitte 43 sein, durch die eine Vielzahl unmittelbar nebeneinander liegender Lappen 44 ausgebildet werden, in Figur 6 in der linken oberen Bildhälfte dargestellt.

In der linken unteren Bildhälfte von Figur 6 sind vereinzelte, untereinander beabstandete Lappen 45 für eine verbesserte Randverhaftung dargestellt, in der rechten unteren Bildhälfte Lappen in Form von Zähnen 46.

In vergleichbarer Weise kann auch die Verhaftung zwischen einem Mittelteil 47 und der Wandauflage 42 verbessert werden, in dem eine Öffnung 48 durch einen Polygonzug 49 in Form eines Vielecks, Figur 6 untere linke Bildhälfte, oder einen Polygonzug 50 in Sternform, Figur 6 untere rechte Bildhälfte, ausgebildet wird, in die passgenau die Mittelteile 47, 51 gem. untere Bildhälfte eingebracht werden können.

Alternativ ist ein Überlappen eines Mittelteils 52 auch bei derartigen Formen von Öffnungen 48 problemlos möglich, angedeutet in der oberen Bildhälfte der Figur 6.

Darüber hinaus sind vielfältige Kombinationsmöglichkeiten weiter gegeben, insbesondere in der Kombination von Lappen, Perforationen und Lochungen.

## Patentansprüche

1. Verfahren zur Herstellung einer Dichtungsmanschette für ein Abdichten des Übergangs von einer Wand auf ein der Wand vorstehendes Rohr oder dergleichen, aufweisend eine zentrale Durchbrechung, deren Größe kleiner bemessen ist als der Querschnitt des Rohres, wobei ein gesondert ausgebildetes, elastisches Mittelteil (2) vorgesehen und an das Mittelteil (2) randseitig eine Wandauflage (5) angefügt ist, wobei ein Zuschnitt der Wandauflage erfolgt (31), bei dem in die Wandauflage (31) eine zentrale Öffnung (33) eingebracht wird, deren Abmessungen größer bemessen sind als die Abmessungen des Rohres, **dadurch gekennzeichnet, dass** in einer Spritzgussmaschine das elastische Mittelteil (30) in die zentrale Öffnung (33) eingebracht und angefügt wird.

2. Verfahren nach Anspruch 1, **dadurch gekennzeichnet, dass** das Mittelteil (2) passgenau in die Wandauflage (5) eingesetzt ist.

3. Verfahren nach Anspruch 1, **dadurch gekennzeichnet, dass** das Mittelteil (21) und die Wandauflage (24) überlappen.

4. Verfahren nach Anspruch 3, **dadurch gekennzeichnet, dass** auf der überlappten Flachseite (26) der Wandauflage (24) ein Vlies (27) aufkaschiert ist.

5. Verfahren nach einem oder mehreren der vorangehenden Ansprüche, **dadurch gekennzeichnet, dass** das Elastizitätsmodul der Wandauflage (5) größer bemessen ist als das des Mittelteils (2).

6. Verfahren nach einem oder mehreren der vorangehenden Ansprüche, **dadurch gekennzeichnet, dass** die Wandauflage ein Vlies oder ein Komposit aus einem Vlies und einer Folie ist.

7. Verfahren nach Anspruch 6, **dadurch gekennzeichnet, dass** das Vlies oder das Komposit mit einer Kaschierung (7) versehen ist.

8. Verfahren nach einem oder mehreren der vorangehenden Ansprüche, **dadurch gekennzeichnet, dass** die Wandauflage (5) randseitig umlaufend mit einer Lochung (11), einer Perforation (41), Lappen (44-46) und/oder Einschnitten (43) versehen ist.

9. Verfahren nach einem oder mehreren der vorangehenden Ansprüche, **dadurch gekennzeichnet, dass** die Öffnung (48) in der Wandauflage (42) oval, rund (4) oder ein Polygonzug (49,50) ist.

10. Dichtungsmanschette, hergestellt nach einem der vorigen Ansprüche.

## Claims

1. Method for producing a sealing collar for sealing a transition between a wall and a pipe protruding from the wall or the like, comprising a central aperture dimensioned to be smaller than the cross section of the pipe, wherein a flexible centre portion (2) formed separately is provided and wall contact element (5) is joined to the flexible centre portion (2) at its edge, wherein a cutting to size of the wall contact element is performed (31), wherein a central opening (33), whose dimensions are greater than the dimensions of the pipe, is introduced into the wall contact element (31), **characterized in that** the flexible centre portion (30) is inserted into and joined to the central opening (33) in an injection moulding machine.

2. Method according to claim 1, **characterized in that** the centre portion (2) is inserted into the wall contact element (5) in an exactly fitting manner.

3. Method according to claim 1, **characterized in that** the centre portion (21) and the wall contact element (24) overlap.

4. Method according to claim 3, **characterized in that** a nonwoven fabric (27) is laminated to the overlapped flat side (26) of the wall contact element (24).

5. Method according to one or several preceding claims, **characterized in that** the elasticity modulus of the wall contact element (5) is greater than that of the centre portion (2).

6. Method according to one or several preceding claims, **characterized in that** the wall contact element is a nonwoven fabric or a composite of a nonwoven fabric and a film.

7. Method according to claim 6, **characterized in that** the nonwoven fabric or the composite is provided with a lamination (7).

8. Method according to one or several preceding claims, **characterized in that** the wall contact element (5) is provided with holes (11), a perforation (41), tabs (44-46), and/or notches (43) extending circumferentially around an edge of the wall contact element.

9. Method according to one or several preceding claims, **characterized in that** the opening (48) defined by the wall contact element (42) is oval, round (4), or a polygonal line (49, 50).

10. Sealing collar, produced according to one of the preceding claims.

## Revendications

1. Procédé de fabrication d'une manchette d'étanchéité pour sceller une transition entre une paroi et un tuyau, ou un élément similaire, ledit tuyau faisant saillie de la paroi, ledit joint comprenant un orifice central, dont les dimensions sont plus petites que la section transversale du tuyau, dans laquelle est prévue une partie médiane élastique (2), formée séparément, et dans laquelle un support de paroi (5) est joint à la partie médiane (2) sur le bord de la dite partie médiane (2),
procédé dans lequel une découpe (31) est réalisée dans le support de paroi, par laquelle une ouverture centrale (33) est introduite dans le support de paroi, ladite ouverture centrale (33) ayant des dimensions plus grandes que les dimensions du tuyau,
**caractérisé par le fait que** la partie médiane élastique (30) est introduite et jointe à l'ouverture centrale (33) dans une machine de moulage par injection.

2. Procédé selon la revendication 1, **caractérisé par le fait que** la partie médiane (2) est insérée dans le support de paroi (5) de manière ajustée.

3. Procédé selon la revendication 1, **caractérisé par le fait que** la partie médiane (2) et le support de paroi (5) se chevauchent.

4. Procédé selon la revendication 3, **caractérisé par le fait que** un non-tissé (27) est laminé sur le côté plat chevauché (26) du support de paroi (24).

5. Procédé selon l'une ou plusieurs des revendications précédentes, **caractérisé par le fait que** le module d'élasticité de support de paroi (5) est plus grand que celui de la partie médiane (2).

6. Procédé selon l'une ou plusieurs des revendications précédentes, **caractérisé par le fait que** le support de paroi est un non-tissé ou un composite d'un non tissé et d'un film.

7. Procédé selon la revendication 6, **caractérisé par le fait que** le non tissé ou le composite est fourni avec un laminage (7).

8. Procédé selon l'une ou plusieurs des revendications précédentes, **caractérisé par le fait que** le support de paroi (5) présente des trous (11), une perforation (41), des pattes (44-48) et/ou des encoches (43) sur tout le pourtour dudit support de paroi (5).

9. Procédé selon l'une ou plusieurs des revendications précédentes, **caractérisé par le fait que** l'ouverture (48) dans le support de paroi (42) est ovale, ronde (4) ou polygonale (49, 50).

10. Manchette d'étanchéité, fabriquée par un procédé selon l'une des revendications précédentes.
